(19) Europäisches Patentamt / European Patent Office / Office européen des brevets

(11) **EP 2 651 130 A1**

(12) **EUROPEAN PATENT APPLICATION**

(43) Date of publication:
**16.10.2013 Bulletin 2013/42**

(21) Application number: **12195606.4**

(22) Date of filing: **05.12.2012**

(51) Int Cl.:
*H04N 7/26* (2006.01)     *H04N 5/232* (2006.01)
*G03B 5/00* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.04.2012 TW 101112648**

(71) Applicant: **Acer Incorporated New Taipei City 221 (TW)**

(72) Inventors:
• **Huang, Shih-Chia**
  **Taipei (TW)**
• **Chen, Bo-Hao**
  **Taipei (TW)**
• **Kuo, Sy-Yen**
  **Taipei (TW)**

(74) Representative: **Chamberlain, Alan James Haseltine Lake LLP Redcliff Quay 120 Redcliff Street Bristol BS1 6HU (GB)**

(54) **Method for assisting in video compression using rotation operation and image capturing device thereof**

(57)     A method for assisting in video compression using rotation operation and an image capturing device thereof are provided. In the method, a rotation operation of the image capturing device is detected, and a rotation angle formed by the rotation operation is calculated. The image capturing device is rotated by the rotation angle so as to capture a current frame. In addition, whether a reference frame having a rotation angle information exists in a reference frame list stored in the image capturing device is determined. If not, a rotational motion vector is calculated based on the rotation angle. The current frame is divided into a plurality of current blocks. Among each of the current blocks, a matching block corresponding to the current block is searched in a reference frame of the reference frame list by using the rotational motion vector, and accordingly, the frame data of the current frame is compressed.

FIG. 1

**Description**

BACKGROUND OF THE INVENTION

FIELD OF THE INVENTION

The invention is directed to a video compression method and an image capturing device thereof, and more particularly to a method for assisting in video compression using a rotation operation.

Description of Related Art

With enhancement of network transmission and multi-media techniques, information communication by pure text has been transformed to combination of text and numerous images and then, further developed as by multi-media audio and video message combining videoes and speeches. Furthermore, with development of social networks in recent years, many people upload various types of multi-media audio and video files to the social networks for sharing or discussing with friends.

However, as for data volume of various types of multi- media video files to be transmitted, the data volume of video images is quite large, and with the increase of resolutions of various video caremas, the data volume required for captured video frames is significantly increased. Without a compression process, network congestion and time delay will seriously occur. Accordingly, when storing or transmitting multi- media video files, a data compressing technique is often used.

There is an absolute relationship between the video frame compression and changes among each frame. Typically, the key technique is motion estimation, and a matching block is an algorithm commonly used for implementing the motion estimation so as to compress frame data. Generally, it takes numerous computing resources and time to execute the motion estimation, and the accuracy of estimaion is often influenced by video frame contents. For example, if a scene change happens or the capturing angle or the capturing position of the video camera is changed, it will result in significant changes among each video frame such that the performance of the motion estimation will be seriously reduced.

SUMMARY OF THE INVENTION

Accordingly, the invention is directed to a method for assisting in video compression using a rotation operation and an image capturing device thereof, by which a frame captured by the image capturing device can be correspondingly controlled according to a rotation operation by a user, and thus, efficiency and accuracy of motion estimation can be enhanced by using the rotation operation.

The invention is directed to a method for assisting in video compression using a rotation operation, adapted to an image capturing device. The method includes steps as follows. First, a rotation operation received by the image capturing device is detected, and a rotation angle formed by the rotation operation is calculated. Then, the image capturing device is rotated by the rotation angle so as to capture a current frame, and the rotation angle is stored as a current angle information. In addition, whether a reference frame having the rotation angle information exists in a reference frame list stored in the image capturing device is determined. If not, a rotational motion vector is calculated by using the rotation angle as a function, the current frame is divided into a plurality of current blocks, a matching block corresponding to each of the current blocks is searched in a first reference frame of the reference frame list by using the rotational motion vector, and accordingly, the frame data of the current block and the corresponding matching block is compressed.

In one embodiment of the invention, the method for assisting in video compression using the rotation operation further includes updating the reference frame list. A current frame is stored as a second reference frame in the reference frame list, and the current angle information is stored as the rotation angle information of the second reference frame.

In one embodiment of the invention, if a storage space of the reference frame list is determined as full, a third reference frame having the most similar angle information to the current angle information is searched in the reference frame list. Meanwhile, the third reference frame and the rotation angle information of the third reference frame are deleted, and then the current frame and the current angle information are stored in the reference frame list.

In one embodiment of the invention, if the reference frame having the rotation angle information existing in the reference frame list is deteremined, steps as follows are further included. A fourth reference frame is searched in the reference frame list, and a angle difference between the rotation angle information of the fourth reference frame and the current angle information is smaller than a predetermined value. Next, the fourth reference frame is divided into a plurality of reference blocks. Besides, a sum of brightness difference between pixels in each of the current blocks and pixels in the corresponding reference blocks is calculated and compared with a thershold respectively. If there are N current blocks having a sum of brightness difference not larger than the threshold, a motion estimation is executed by using a relative position of the current block as a starting point so as to search for the matching block corresponding to each of the current blocks in the fourth reference frame, and accordingly, the frame data of the current block and the corresponding matching block is compressed, where N is a positive integer larger than 1.

In one embodiment of the invention, after executing the motion estimation operation, updating the reference frame list is further included. Therein, if the rotation angle information of the fourth reference frame is equal to the current angle information, the fourth reference frame and the rotation angle information of the fourth reference frame are deleted, and the current frame and the current angle information are stored in the reference frame list.

In one embodiment of the invention, a step of detecting a rotation operation recived by the image capturing device and calculating a rotation angle formed by the rotation operation includes detecting a touch rotation operation received by the touch screen of the image capturing device and calculating the rotation angle formed by the touch rotating operation.

In one embodiment of the invention, a step of detecting a rotation operation recived by the image capturing device and calculating a rotation angle formed by the rotation operation includes detecting a three-dimensional rotation operation received by the image capturing device using a displacement detection module so as to calculate the rotation angle formed by the three-dimensional rotation operation.

The invention is further directed to an image capturing device, which includes a lens module, a detection module, a storage unit and a control unit. The detection module is configured to detect a rotation operation. The storage unit is configured to store a reference frame list. The control unit is coupled to the lens module, the detection module and the storage unit. The control unit calculates a rotation angle formed by the rotation operation, controls the lens module by the rotation angle so as to capture a current frame and stores the rotation angle as a current angle information. Therein, the control unit also determines whether a reference frame having a rotation angle information exists in the reference frame list stored in the storage unit. If not, the control unit calculates a rotational motion vector by using the rotation angle as a function. Moreover, the control unit divides the current frame into a plurality of current blocks, searches a matching block corresponding to each of the current blocks in a first reference frame of the reference frame list by using the rotational motion vector, and compresses the frame data of the current block and the corresponding matching block.

In one embodiment of the invention, the image capturing device further includes a motion estimation unit coupled to the control unit. If the control unit searches for a fourth reference frame in the reference frame list, in which an angle difference between the rotation angle information of the fourth reference frame and the current angle information is smaller than a predetermined value, then the fourth reference frame is divided into a plurality of reference blocks. Besides, a sum of brightness difference between pixels in each of the current blocks and the corresponding reference blocks is calculated and compared with a threshold respectively. Therein, if there are N current blocks having a sum of brightness difference not larger than the threshold, the motion estimation unit executes motion estimation by using a relative position of the current block as a starting point and provides the matching block corresponding to each of the current blocks to the control unit. Thus, the frame data of the current block and the corresponding matching block is compressed by the control unit, where N is a positive integer larger than 1.

In one embodiment of the invention, the image capturing device further includes a touch screen coupled to the detection unit. The detection unit detects a touch rotation operation received by the touch screen and provides information of the touch rotation operation to the control unit so as to calculate the rotation angle formed by the touch rotation operation.

In one embodiment of the invention, the image capturing device further includes a displacement detection module coupled to the control unit. The displacement detection module detects a three-dimensional rotation operation received by the image capturing device, such that the control unit calculates the rotation angle formed by the three-dimensional rotation operation.

To sum up, by the method for assisting in video compression using the rotation operation and the image capturing device thereof of the invention, the frame to be captured by the lens can be correspondingly controlled according to the user's rotation operation, and the user does not need to move the image capturing device directly. In addition, the rotating motion vector can be further calculated by using the rotation operation so as to speed up the searching of matching block. Accordingly, efficiency and accuracy of motion estimation can be enhanced by using the rotation operation.

In order to make the aforementioned and other features and advantages of the invention more comprehensible, several embodiments accompanied with figures are described in detail below.

BRIEF DESCRIPTION OF THE DRAWINGS

The accompanying drawings are included to provide further understanding, and are incorporated in and constitute a part of this specification. The drawings illustrate embodiments and, together with the description, serve to explain the principles of the invention.

FIG. 1 is a block digram illustrating an image capturing device according to one embodiment of the invention.

FIG. 2 is a flowchart illustrating a method for assisting in video compression using a rotation operation according to one embodiment of the invention.

FIG. 3A is a schematic diagram illustrating a touch rotation operation executed on a touch screen according to one embodiment of the invention.

FIG. 3B is a schematic diagram illustrating a touch rotation operation executed on a touch screen according to another embodiment of the invention.

FIG. 4 is a schematic diagram illustrating a current frame captured after rotating an image capturing device by using a rotation angle according to one embodiment of the invention.

FIG. 5 is a block digram illustrating an image capturing device according to another embodiment of the invention.

FIG. 6 is a flowchart illustrating a method for assisting in video compression using a rotation operation according to another embodiment of the invention.

FIG. 7 is a schematic diagram illustrating a reference frame list according to another embodiment of the invention.


DESCRIPTION OF EMBODIMENTS


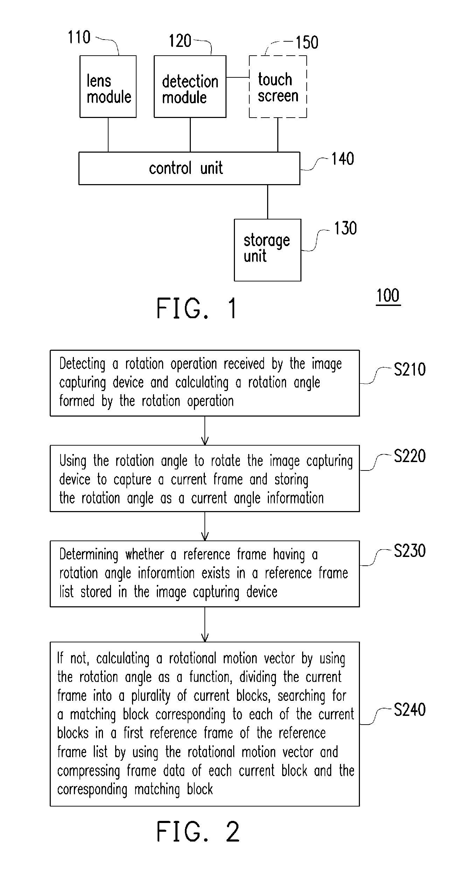

FIG. 1 is a block digram illustrating an image capturing device according to one embodiment of the invention. The image capturing device according to the present embodiment is, for example, a digital video camera, a surveillance video camera, film video camera or other type of image capturing device used for video recording, but the invention is not limited thereto. Referring to FIG. 1, an image capturing device 100 includes a lens module 110, detection module 120, a storage unit 130 and a control unit 140. Besides, the image capturing device 100 may further include a touch screen 150. Their functions are described hereinafter.

The lens module 110, for example, includes an optical fixed-focus lens or an optical zoom lens and a module having a photosensetive component, such as a charge coupled device (CCD) or a complementary metal-oxide semiconductor (CMOS). The lens module 110 adopted by the present embodiment can be controlled by a signal from the control unit 140 so as to execute a self-rotation operation that is changable with various angles, such that video frames in different angles can be captured.

The detection module 120 is configured to detect a trigger signal generated when a user executes a trigger operation. The so-called trigger operation includes different implentation manners, which will be described as follows. In the present embodiment, the image capturing device 100 includes the touch screen 150 coupled to the detection module 120, and thus, the detection module 120 may be configured to detect a touch rotation operation executed by the user on the touch screen 150. If the image capturing device 100 includes a speech recognition function, the user may execute the trigger operation by speech, and the detection module 120 is configured to detect speech content. Therefore, the detection module 120 is designed with functions provided by the image capturing device 100, and the invention is not limited thereto.

The storage unit 130 is, for example, any fixed type or any removable type of random access memory (RAM), flash memory, hard disk and configured to store reference frame lists and video frames.

The control unit 140 is coupled with each module of the image capturing device 100, and the control unit 140 is, for example, a central processing unit (CPU), a microprocessor, a digital signal processor (DSP), a programmabe controller, an application specific integrated circuits (ASIC) or the like, which is capable of computing, managing and controlling all tasks of the image capturing device 100.

The touch screen 150 is assembled by a display unit, such as a liquid crystal display (LCD) or a light-emitting diode (LED) and a resistance or capacitive touch panel, which provides a display operation and a touching operation at the sam time.

FIG. 2 is a flowchart illustrating a method for assisting in video compression using a rotation operation according to one embodiment of the invention. A method as described in the present embodiment is adapted to the image capturing device 100 shown in FIG. 1. Hereinafter, a description of steps of a method for assisting in video compression using a rotation operation will be made with reference to each component of the image capturing device 100.

Referring to FIG. 1 and FIG. 2, as shown in step S210, the detection module 120 detects a rotation operation received by the image capturing device 100 and provides information of the rotation operation to the control unit 140, such that the control unit 140 could calculate a rotation angle formed by the rotation operation.. In the present embodiment, the image capturing device 100 has a touch screen 150, and thus, the detection module 120 is configured to detect a touch rotation operation received by the touch screen 150, for example, a touch rotation operation generated by a user touching on the touch screen 150 by hand.

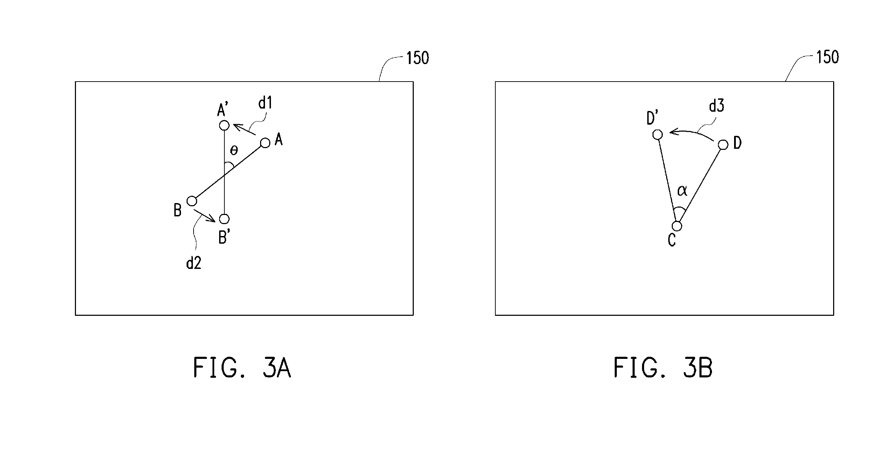

Specifically, FIG. 3A is a schematic diagram illustrating a touch rotation operation executed on a touch screen according to one embodiment of the invention. Referring to FIG. 3A, provided that the user executes a touch rotation operation by two fingers simultaneously, that is, the user initially places the two fingers respectively on a touching point A and a touching point B on the touch screen 150, drags and slides respectively according to a direction d1 and a direction d2 and then moves the two fingers off the touch screen 150 until reaching a touching point A' and a touching point B'. The detection module 120, for example, provides the control unit 140 with positions of the touching points A, B, A' and B', or alternatively, the detection module 120 directly provides the control unit 140 with linking information between the touching points A and B and between the touching points A' and B' so that the control unit 140 calculates a rotation angle θ.

FIG. 3B is a schematic diagram illustrating a touch rotation operation executed on a touch screen according to another embodiment of the invention. Referring to FIG. 3B, provided that the user executes a touch rotation operation by two fingers simultaneously, that is, the user initially places the two fingers respectively on a touching point C and a touching point D on the touch screen 150, drags and slides one of the two fingers according a direction d3 (with the other finger fixed on the touching point C) then moves the two fingers off the touch screen 150 until the one of the two fingers reaches a touching point D'. The detection module 120, for example, provides the control unit 140 with positions of the touching points C, D and D', or alternatively, the detection module 120 directly provides the control unit 140 with linking information  between the touching points C and D and between the touching points C and D' so that the control unit 140 calculates a rotation angle α.

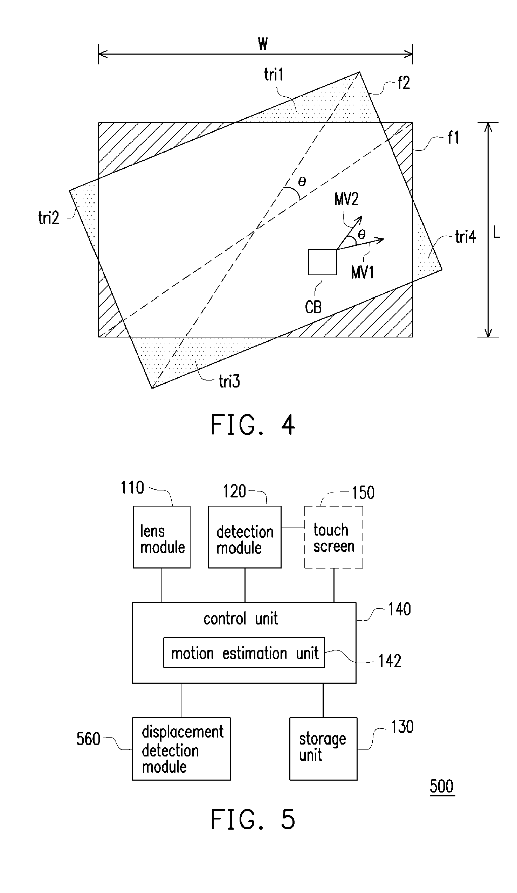

Accordingly, the invention is not intent to limit forms of the touch rotation operation, and any type of touch and drag operation configured to generate a rotation angle can be an alternative embodiment of the invention. Then, as shown in step S220, the control unit 140 controls the lens module 110 of the image capturing device 100 to rotate by using the rotation angle, so as to capture a current frame and store the rotation angle as a current angle information. In detail, FIG. 4 is a schematic diagram illustrating a current frame captured after rotating an image capturing device by using a rotation angle according to one embodiment of the invention. Referring to FIG. 4, an image captured by the lens module 110 before rotating is a previous frame f1. Given that in the present embodiment, a touch rotation operation as shown in FIG. 3A is received, the lens module 110 is rotated based on the rotation angle θ so as to obtain a current frame f2. Then the rotation angle θ is sotred as the current angle information.

In step S230, the control unit 140 determines whether a reference frame having a rotation angle information exists in a reference frame list stored in the storage unit 130 of the image capturing device 100. Therein, the reference frame list is a list of video frames captured by the image capturing device 100 at different time points previously. Generally, the reference frame list may be dynamically updated, that is, when the image capturing device 100 constantly captures new video frames by time, a plurality of reference frames stored in the reference frame list may be updated by time. Additionally, in the reference frame list, for example, sixteen or thirty-two reference frames may be simutaneously stored, which can be set by the user according to actaul requirements.

If the reference frame stored in the reference frame list does not have the rotation angle information, step S240 is continued. Therein, a rotating motion vector is calculated by using the rotation angle as a function, the current frame is divided into a plurality of current blocks, a matching block corresponding to each of the current blocks is searched in a first reference frame of the reference frame list by using the rotational motion vector, and accordingly, frame data of each of the current blocks and the matching block corresponding thereto is compressed.

In detail, given that an absolute position of a current block CB in FIG. 4 is (Xpos, Ypos) and given that a given motion vector of the current block CB in a corresponding position in the previous frame fl is MV1, and a coordinate thereof is (x.y) . In the invention, the given motion vector MV1 before being rotated is not directly used as a reference value for searching the matching block; instead, the aforementioned rotation angle θ is used as the function for calculating a new rotation motion vector MV2, and a coordinate thereof is (x', y') . Xpos, Ypos, x, y, x' and y' as mentioned above are integers, and a transform formula thereof is as follows:

$$\begin{bmatrix} x' \\ y' \end{bmatrix} = \begin{bmatrix} \cos\theta & -\sin\theta \\ \sin\theta & \cos\theta \end{bmatrix} \begin{bmatrix} x \\ y \end{bmatrix} \qquad (1)$$

After the rotating motion vector MV2 is obtained, the current frame may be divided into a plurality of current blocks. Among each of the current blocks, the matching block corresponding to each of the current blocks is searched in the first reference frame (e.g. the previous frame fl shown in FIG. 4) of the reference frame list by using the rotating motion vector MV2, and accordingly, the frame data of each of the current blocks and the matching block corresponding thereto is compressed. Since the  rotation movement is considered in the motion vector, the algorithm for searching the matching block will be speeded up by using the rotating motion vector MV2.

It should be mentioned that triangle areas tri1~tri4 as shown in FIG. 4 are video frames captured after the rotation operation is executed, and the matching block can not be found in the previous frame fl by the rotating motion vector MV2 adopting the method as previously described. Thus, in order to ensure the triangle areas tri1~tri4 can be accurately estimated, a range of the rotating motion vector MV2 is limited by following formulas:

$$x''=Clip(Xpos+x',0,W)$$

$$y''=Clip(Ypos+y',0,L) \qquad (2)$$

Here, W is a horizontal width of the previous frame fl, L is a vertical length of the previous frame fl, a coordinate (x", y") is the range-limited rotating motion vector, and a function Clip allows the coordinate (x", y") to satisfy conditions of $0\leq (x''=Xpos+x')\leq W$ and $0\leq (y''=Ypos+y')\leq L$.

Besides the range limitation of the rotating motion vector as described above, another solution for estimating the motioin vectors of the the triangle areas tri1~tri4 is further porvided by the invention. Another embodiment is used as follows for describing the invention.

FIG. 5 is a block digram illustrating an image capturing device according to another embodiment of the invention. In the present embodiment, an image capturing device 500 further includes a motion estimation unit 142 and a displacement detection module 560 in addition to the lens module 110, the detection module 120, the storage unit 130, the control unit 140 and the touch screen 150. Therein, the displacement detection module 560 is coupled to the control unit 140, and the displacement detection module 560 is, for example, a G-sensor, a tilt sensor or a gyro sensor.

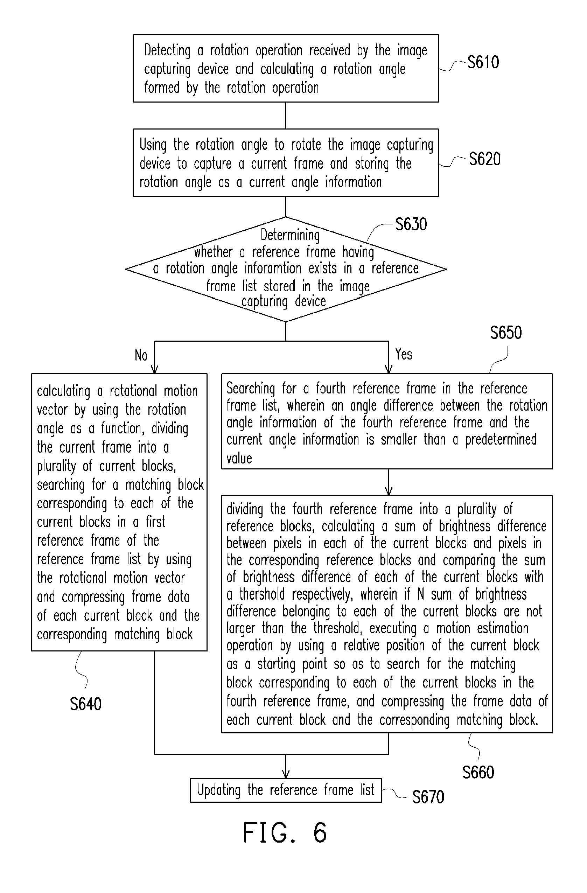

FIG. 6 is a flowchart illustrating a method for assisting in video compression using a rotation operation according to another embodiment of the invention. Hereinafter, how the image capturing device 500 works will be described with reference to FIG. 6. Please referring to FIG. 5 and FIG. 6.

First, a rotation operation received by the image capturing device 500 is detected and provided to the control unit 140 to calculate a rotation angle formed by the rotation operation (step S610). It should be noted that if the touch screen 150 in the present embodiment is a reversible or a rotatable touch screen, the displacement detection module 560 may be configured to detect information, such as variations of inclination, various speeds or accelerations. Thus, in the present embodiment, in addition to receive a rotation operation executed on the touch screen 150, a three-dimensional rotation angle of the touch screen 150 or the image capturing device 500 itself may be further calculated through information provided by the displacement detection module 560.

Then, the control unit 140 controls the lens module 110 of the image capturing device 500 to rotate by using the rotation angle so as to capture a current frame and stores the rotation angle as a current angle information (step S620). Therein, the lens module 110 can perform a two-dimension rotation operation or a three-dimension rotation operation corresponding to the touch screen 150.

Afterward, the control unit 140 determines whether a reference frame having a rotation angle information exists in the reference frame list stored in the storage unit 130 of the image capturing device 500 (step S630). If not, step S640 is continued. Steps S610~S640 are same as or similar to steps S210~S240 as described in the previous embodiement, and thus, will not be repeatedly described in detail hereinafter.

Differing from the previous embodiment, if the reference frame having the rotation angle information does exist in the reference frame list of the present embodiment, a reference frame is searched in the reference frame list. An angle difference between the rotation angle information of the reference frame and the current angle information is smaller than a predetermined value (step S650).

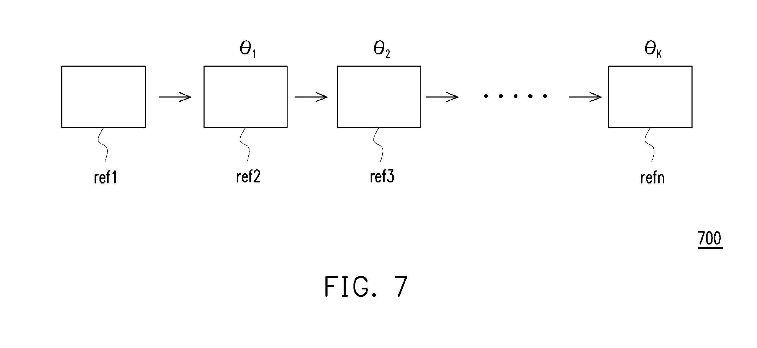

In detail, FIG. 7 is a schematic diagram illustrating a reference frame list according to another embodiment of the invention. Referring to FIG. 7, a reference frame list 700 has n pieces of reference frames, where n is a positive integer. Therein, a reference frame ref1 is set as a previous frame, that is, according to classification by capturing time, a previous frame is a reference frame captured at a time point that is the nearest to the current frame. In other words, every time when a new current frame is captured, the previous frame will be constantly updated. In addition, a reference frame ref2 has a rotation angle information (i.e. a rotation angle $\theta1$), which represents that the reference frame ref2 is a video frame captured after the lens module 110 is rotated based on the rotation angle $\theta1$, and a reference frame ref3 also has a rotation angle information (i.e. a rotation angle $\theta2$), which represents that the reference frame ref3 is a video frame captured after the lens module 110 is rotated based on the rotation angle $\theta2$, and likewise.

Here, an example of the method for searching the reference frame in step S650 described as above is illustrated. Provided that the rotation angle shown in the current angle information is 30 degrees, in the present embodiment, if the predetermined value is 5 degrees, it indicates that a reference frame having the rotation angle information shown from 25 degrees to 35 degrees is searched in the reference frame list 700. If multiple reference frames meet the aforementioned requirement, one of reference frames (i.e. a fourth reference frame) that is the most similar to the current angle information may be selected, for example, the reference frame samely having the rotation angle of 30 degree may be selected. Therein, the predetermined value may be set by the person having ordinary skills in the art according to actual conditions.

Next, in step S660, the reference frame is divided into a plurality of reference blocks. Meanwhile, a sum of brightness difference between pixels in each of the current blocks and the reference blocks corresponding thereto is calculated and compared with a threshold respectively. In other words, among each of the current blocks, residual data (i.e. sum of brightness difference) between each current block and the corresponding reference block is calculated and compared with a threshold respectively. In one embodiment, if most of the residual data are not larger than the threshold, a motion estimation is executed by the motion estimation unit 142 using a relative position of the current block as a starting point, such that the corresponding matching block is searched in the reference frame and accordingly, frame data of the current block and the corresponding matching block is compressed.

However, it should be noted that if the number of the residual data which is larger than the threshold is more than a certain number, it indicates that both the reference frame and the current frame are video frames captured based on the same rotation angle; however, a scene change may already happen and result in a significant change of the residual data. Therein, the certain number is a positive integer N, where N is, for example, half of the number of current blocks. Thus, the estimating method using the rotating motion vector as described above according to the previous embodiment is adopted. Accordingly, the invention can apply the method of the present embodiment to execute determination without knowing about the scene content in advance.

Finally, after executing the step of motion estimation operation, the reference frame list must be updated (step S670) . If step S640 is continued, since no reference frame having the rotation angle information exists in the reference frame list temporarily in step S640, and the update method only requires storing the current frame in the reference frame ref1 (i.e. the previous frame), additionally storing the current frame in one of reference frames ref2~refn and recording the current angle information corresponding thereto. If a storage space of the reference frames ref2~refn is full, a third reference frame having angle information most similar to the current angle information is searched in the reference frame list. In other words, a reference frame having the smallest rotation angle difference is searched. The third reference frame and its rotation angle information are deleted, and the current frame and the current angle information are stored in the reference frame list.

On the other hand, if step S660 is continued, it indicates that the reference frame having the rotation angle information already exists in the reference frame list. Therefore, in one embodiment, if the rotation angle information of the fourth reference frame in the reference frame list is equal to the current angle information, the fourth reference frame and its rotation angle information are deleted, and the current frame and the current angle information are stored in the reference frame list. In another embodiment, if the storage space is full, the reference frame used in step S660 is deleted, and the current frame and the current angle information are correspondingly stored. Otherwise, the current frame and the current angle information are directly sotred in the reference frame list.

Accordingly, in the invention, the lens of the image capturing device can be corresponsingly controlled based on the rotation operation executed by the user via the touch screen or the rotation operation of the image capturing device itself. Thus, the user does not need to move the image capturing device directly. Comparing with a video recording device with a large size that is difficult to move, the difficulty of operation is much simplified. In the related art, the capturing angle of the lens among the video frames is not taken into consideration for searching the matching block, and thus, it takes more computing resources and time for the motion estimation. However, in the invention, the rotating motion vector can be further calculated by using the rotation operation so as to speed up the searching for the matching block. Accordingly, efficiency and accuracy of motion estimation can be enhanced. Finally, by way of simulatanously recording the reference frame and the rotation angle information corresponding thereto in the reference frame list, accuracy of motion estimation can be enhanced, which assists in compressing video frames.

**Claims**

1. A method for assisting in video compression using a rotation operation, adapted to an image capturing device (100, 500), comprising:

   detecting (S210, S610) a rotation operation recived by the image capturing device (100, 500) and calculating a rotation angle formed by the rotation operation;
   rotating (S220, S620) the image capturing device (100, 500) by the rotation angle so as to capture a current frame and storing the rotation angle as a current rotation information;
   determining (S230, S630) whether a reference frame having a rotation angle information exists in a reference frame list stored in the image capturing device (100, 500); and
   if not, calculating (S240, S640) a rotational motion vector by using the rotation angle as a function, dividing the current frame into a plurality of current blocks, searching for a matching block corresponding to each of the current blocks in a first reference frame of the reference frame list by using the rotational motion vector and compressing frame data of the current block and the corresponging matching block.

2. The method for assisting in video compression using the rotation operation according to claim 1, further comprising:

updating the reference frame list, wherein the current frame is stored as a second reference frame in the reference frame list, and the current angle information is stored as the rotation angle information of the second reference frame.

3. The method for assisting in video compression using the rotation operation according to claim 2, wherein:

if a storage space of the reference frame list is determined as full, a third reference frame having the most similar angle information to the current angle information is searched in the reference frame list; and
the third reference frame and the rotation angle information of the third reference frame are deleted, and then the current frame and the current angle information are stored in the reference frame list.

4. The method for assisting in video compression using the rotation operation according to claim 1, wherein if the reference frame having the rotation angle information exists in the reference frame list, the method further comprises:

searching (S650) for a fourth reference frame in the reference frame list, wherein an angle difference between the rotation angle information of the fourth reference frame and the current angle information is smaller than a predetermined value;
dividing (S660) the fourth reference frame into a plurality of reference blocks;
respectively calculating (S660) a sum of brightness difference between pixels in each of the current blocks and pixels in the corresponding reference blocks, and respectively comparing the sum of brightness difference of each current block with a threshold; and
if there are N current blocks having sum of brightness difference not larger than the threshold, executing (S660) a motion estimation by using a relative position of the current block as a starting point so as to search for the matching block corresponding to each of the current blocks in the fourth reference frame and compressing the frame data of the current block and the corresponding matching block, wherein N is a positive integer larger than 1.

5. The method for assisting in video compression using the rotation operation according to claim 4, wherein after executing the motion estimation operation, the method further comprises:

updating (S670) the reference frame list,
wherein if the rotation angle information of the fourth reference frame is equal to the current angle information, the fourth reference frame and the rotation angle information of the fourth reference frame are directly deleted, and the current frame and the current angle information are stored in the reference frame list.

6. The method for assisting in video compression using the rotation operation according to claim 1, wherein detecting a rotation operation recived by the image capturing device (100, 500) and calculating a rotation angle formed by the rotation operation further comprises:

detecting a touch rotating operation received by a touch screen of the image capturing device (100, 500) and calculating the rotation angle formed by the touch rotating operation.

7. The method for assisting in video compression using the rotation operation according to claim 1, wherein detecting a rotation operation received by the image capturing device (100, 500) and calculating the rotation angle formed by the rotation operation comprises:

detecting a three-dimensional rotation operation received by the image capturing device (100, 500) using a displacement detection module (560) so as to calculate the rotation angle formed by the three-dimensional rotation operation.

8. An image capturing device (100, 500), comprising:

a lens module (110);
a detection module (120), detecting a rotation operation;
a storage unit (130), storing a reference frame list; and
a control unit (140), coupled to the lens module (110), the detection module (120) and the storage unit (130), calculating a rotation angle formed by the rotation operation, controlling the lens module (110) by the rotation angle so as to capture a current frame and storing the rotation angle as a current angle information,
wherein the control unit (140) determines whether a reference frame having a rotation angle information exists in the reference frame list stored in the storage unit, and if not, the control unit (140) calculates a rotational motion vector by using the rotation angle as a function, divides the current frame into a plurality of current blocks, searches for a matching block corresponding to each of the current blocks in a first reference frame of the reference frame list by using the rotational motion vector and compresses frame data of the current block and the corresponging matching block.

9. The image capturing device (100, 500) according to claim 8, wherein:

the control unit (140) updates the reference frame list stored in the storage unit, stores the current frame in the storage unit as a second reference frame in the reference frame list and stores the current angle information as the rotation angle information of the second reference frame.

10. The image capturing device (100, 500) according to claim 9, wherein:

if the control unit (140) determines that a storage space of the storage unit for storing the reference frame list is full, the control unit (140) searches for a third reference frame having the most similar angle information in the reference frame list, deletes the third reference frame and the rotation angle information of the third reference frame and stores the current frame and the current angle information in the reference frame list.

11. The image capturing device (100, 500) according to claim 8, wherein the control unit (140) comprises:

a motion estimation unit (142), executing a motion estimation,
wherein the control unit (140) searches for a fourth reference frame in the reference frame list, if an angle difference between the rotation angle information of the fourth reference frame and the current angle information is smaller than a predetermined value, the control unit (140) divides the fourth frame into a plurality of reference blocks, calculates a sum of brightness difference between pixels in each of the current blocks and pixels in the corresponding reference blocks, and compares the sum of brightness difference of each of the current blocks with a threshold respectively,
wherein if there are N current blocks having sum of brightness difference not larger than the threshold, the motion estimation unit (142) executes the motion estimation by using a relative position of the current block as a starting point and provides the matching block corresponding to each of the current blocks to the control unit (140), and the control unit (140) compresses the frame data of the current block and the corresponding matching block, wherein N is a positive integer larger than 1.

12. The image capturing device (100, 500) according to calim 11, wherein:

the control unit (140) updates the reference frame list stored in the storage unit, and if the rotation angle information of the fourth reference frame stored in the storage unit is equal to the current angle information, the control unit (140) directly deletes the fourth reference frame and the rotation angle information of the fourth reference frame, and stores the current frame and the current angle information in the reference frame list.

13. The image capturing device (100, 500) according to claim 8, further comprising:

a touch screen, coupled to the detection unit, wherein the detection unit detects a touch rotation operation received by the touch screen and provides information of the touch rotation operation to the control unit (140) so as to calculate the rotation angle formed by the touch rotation operation.

14. The image capturing device (100, 500) according to claim 8, further comprising:

a displacement detection module (560), coupled to the control unit (140) and detecting a three-dimensional rotation operation received by the image capturing device (100, 500), such that the control unit (140) calculating the rotation angle formed by the three-dimensional rotation operation.

110 — 120 — ⌐ ‐150

| lens module | detection module | touch screen |

control unit — 140

storage unit ⌐ 130

FIG. 1    <u>100</u>

---

Detecting a rotation operation received by the image capturing device and calculating a rotation angle formed by the rotation operation — S210

Using the rotation angle to rotate the image capturing device to capture a current frame and storing the rotation angle as a current angle information — S220

Determining whether a reference frame having a rotation angle inforamtion exists in a reference frame list stored in the image capturing device — S230

If not, calculating a rotational motion vector by using the rotation angle as a function, dividing the current frame into a plurality of current blocks, searching for a matching block corresponding to each of the current blocks in a first reference frame of the reference frame list by using the rotational motion vector and compressing frame data of each current block and the corresponding matching block — S240

FIG. 2

FIG. 3A

FIG. 3B

FIG. 4

FIG. 5

Detecting a rotation operation received by the image capturing device and calculating a rotation angle formed by the rotation operation ⟋S610

Using the rotation angle to rotate the image capturing device to capture a current frame and storing the rotation angle as a current angle information ⟋S620

S630
Determining whether a reference frame having a rotation angle inforamtion exists in a reference frame list stored in the image capturing device

S650

No

calculating a rotational motion vector by using the rotation angle as a function, dividing the current frame into a plurality of current blocks, searching for a matching block corresponding to each of the current blocks in a first reference frame of the reference frame list by using the rotational motion vector and compressing frame data of each current block and the corresponding matching block

S640

Yes

Searching for a fourth reference frame in the reference frame list, wherein an angle difference between the rotation angle information of the fourth reference frame and the current angle information is smaller than a predetermined value

dividing the fourth reference frame into a plurality of reference blocks, calculating a sum of brightness difference between pixels in each of the current blocks and pixels in the corresponding reference blocks and comparing the sum of brightness difference of each of the current blocks with a thershold respectively, wherein if N sum of brightness difference belonging to each of the current blocks are not larger than the threshold, executing a motion estimation operation by using a relative position of the current block as a starting point so as to search for the matching block corresponding to each of the current blocks in the fourth reference frame, and compressing the frame data of each current block and the corresponding matching block.

S660

Updating the reference frame list ⟍ S670

FIG. 6

FIG. 7

## EUROPEAN SEARCH REPORT

**Application Number**

EP 12 19 5606

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2011/294544 A1 (LIANG LIANG [US] ET AL) 1 December 2011 (2011-12-01)<br>* paragraph [0005] - paragraph [0006] *<br>* paragraph [0036] *<br>* paragraph [0076] *<br>* figures 4, 10A-10B *<br>----- | 1-14 | INV.<br>H04N7/26<br>H04N5/232<br>G03B5/00 |
| A | STEINBACH E ET AL: "Using multiple global motion models for improved block-based video coding",<br>IMAGE PROCESSING, 1999. ICIP 99.<br>PROCEEDINGS. 1999 INTERNATIONAL CONFERENCE ON - KOBE, JAPAN 24-28 OCT. 1999, IEEE, PISCATAWAY, NJ, USA,<br>vol. 2, 24 October 1999 (1999-10-24),<br>pages 56-60, XP010369069,<br>DOI: 10.1109/ICIP.1999.822854<br>ISBN: 978-0-7803-5467-8<br>* the whole document *<br>----- | 1-14 | |
| A | US 2004/165061 A1 (JASINSCHI RADU S [US] ET AL) 26 August 2004 (2004-08-26)<br>* paragraph [0004] - paragraph [0006] *<br>* paragraph [0046] *<br>* paragraph [0054] *<br>----- | 1-14 | **TECHNICAL FIELDS SEARCHED (IPC)**<br><br>H04N<br>G03B |
| A | WO 2009/155926 A1 (HASSELBLAD AS [DK]; POULSEN ANDERS [DK]) 30 December 2009 (2009-12-30)<br>* abstract *<br>* page 1, line 2 - page 3, line 14 *<br>* page 4, line 23 - page 5, line 12 *<br>* page 5, line 24 - page 5, line 31 *<br>* page 8, line 30 - page 9, line 21 *<br>* page 10, line 19 - page 10, line 21 *<br>* figures 2, 3, 12, 13 *<br>* claims 1-15 *<br>-----<br>-/-- | 1-14 | |

The present search report has been drawn up for all claims

| Place of search | Date of completion of the search | Examiner |
|---|---|---|
| Munich | 15 March 2013 | Fassnacht, Carola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 651 130 A1**

EUROPEAN SEARCH REPORT

Application Number

EP 12 19 5606

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 136 336 A1 (FRAUNHOFER GES FORSCHUNG [DE]) 23 December 2009 (2009-12-23) * abstract * | 1-14 | |
| A | US 2012/070141 A1 (SCHOLZ ERWIN [US] ET AL) 22 March 2012 (2012-03-22) * abstract * * paragraph [0011] * * paragraph [0019] * * paragraph [0039] * * paragraph [0052] * | 1-14 | |
| A | US 2007/223914 A1 (AWAZU KOUHEI [JP] ET AL) 27 September 2007 (2007-09-27) * abstract * * paragraph [0007] - paragraph [0017] * * paragraph [0111] * * figures 9-13 * | 1-14 | |
| A | HEWLETT-PACKARD COMPANY ET AL: "Methods for document translation rotation and scaling on a touch-screen display", RESEARCH DISCLOSURE, MASON PUBLICATIONS, HAMPSHIRE, GB, vol. 570, no. 31, 1 October 2011 (2011-10-01), page 1166, XP007140865, ISSN: 0374-4353 * the whole document * | 1,6,8,13 | TECHNICAL FIELDS SEARCHED (IPC) |

The present search report has been drawn up for all claims

| Place of search | Date of completion of the search | Examiner |
|---|---|---|
| Munich | 15 March 2013 | Fassnacht, Carola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 12 19 5606

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2013

| Patent document cited in search report | | Publication date | Patent family member(s) | | Publication date |
|---|---|---|---|---|---|
| US 2011294544 | A1 | 01-12-2011 | CN 102907092 A<br>EP 2577959 A1<br>US 2011294544 A1<br>WO 2011150109 A1 | | 30-01-2013<br>10-04-2013<br>01-12-2011<br>01-12-2011 |
| US 2004165061 | A1 | 26-08-2004 | US 6748158 B1<br>US 2004165061 A1 | | 08-06-2004<br>26-08-2004 |
| WO 2009155926 | A1 | 30-12-2009 | US 2011176035 A1<br>WO 2009155926 A1 | | 21-07-2011<br>30-12-2009 |
| EP 2136336 | A1 | 23-12-2009 | AT 535890 T<br>AT 537522 T<br>EP 2118852 A1<br>EP 2136336 A1<br>WO 2008106995 A1 | | 15-12-2011<br>15-12-2011<br>18-11-2009<br>23-12-2009<br>12-09-2008 |
| US 2012070141 | A1 | 22-03-2012 | NONE | | |
| US 2007223914 | A1 | 27-09-2007 | JP 2007259164 A<br>US 2007223914 A1 | | 04-10-2007<br>27-09-2007 |

EPO FORM P0459

For more details about this annex : see Official Journal of the European Patent Office, No. 12/82